# EUROPEAN PATENT SPECIFICATION

(11) **EP 2 840 043 B1**
(45) Date of publication and mention of the grant of the patent: **22.02.2017**
(21) Application number: 13181582.1
(22) Date of filing: 23.08.2013
(51) Int. Cl.: B65D 81/32, B65D 77/22, B65B 55/16, A23L 3/01, B65D 79/00, B65D 81/34, B65B 7/16

(54) **Multi-compartment food packaging method and corresponding package**
Mehrkammer-Lebensmittelverpackungsverfahren und entsprechende Packung
Procédé d'emballage d'aliments à plusieurs compartiments et paquet correspondant

(43) Date of publication of application: 25.02.2015
(73) Proprietor: MicVac AB, 431 37 Mölndal (SE)
(72) Inventor: Eldh, Karolina, 430 90 ÖCKERÖ (SE); Larsson, Fredrik, 431 40 Mölndal (SE); Olofsson, Olle, 413 05 Göteborg (SE)
(74) Representative: Awapatent AB

(56) References cited:
- WO-A1-2004/045985
- US-A- 4 013 798
- US-B1- 6 187 354

## Description

### Field of Technology

The present invention relates to a method of pasteurizing and vacuum-packing food. Moreover, the present invention relates to a package to be used in the implementation of said method.

### Background of the invention

When ready-to-eat factory-prepared dishes are to be heated in microwave ovens, the package contents will as a rule be unevenly heated. One manner of remedying this drawback is to arrange a material of a special kind in the package in those portions of the package contents that normally are heated to a lesser degree than other portions. This special material is chosen for its capacity to improve absorption of the microwaves and consequently the package contents located in the area where the special material is present are heated indirectly via the high-absorption material. One alternative is to use materials that rather than absorbing microwaves actually prevent such waves from reaching their target. This kind of material therefore is positioned in the area of the package that normally receives most heat. Packages fitted with integrated special materials obviously are more expensive to produce while at the same time they add to the complexity of the manufacturing process.

Furthermore, the keeping qualities of ready-to-eat food kept under refrigeration are limited in the case of traditionally packaged heat-and-eat dishes. The prepared food is transferred to packages, which are then subjected to a vacuum pressure, alternatively are filled with an inert gas, such as carbon dioxide. Vacuum-packing often is not sufficient to ensure the keeping qualities of the ready-cooked food inside the package over longer periods. The transfer of the ready-cooked food onto the package also puts the food into contact with the surrounding air, which further shortens the period of freshness of the food.

There is a large variety of dishes that customers for various reasons would prefer to heat and/or serve without mixing the ingredients or servings. For example a serving of casserole may negatively affect the intended consistency of a side dish. However, while there are packages that separate servings, there are difficulties with maintaining keeping-qualities, ease of cooking and manufacturing costs with such packages. Document WO 2004/045985 A1 discloses a method of pasteurizing and vacuum packaging foodstuffs comprising the steps of placing the foodstuff in a tray with a flexible base and rigid side walls so that the tray is filled to 40-60% of its maximum volume; covering the tray with a flexible layer to form the packaging; providing the packaging with a one-way valve; pasteurizing the packaging contents using microwaves; closing the valve once the contents are pasteurized; and cooling the packaging to create a vacuum inside it so that the latter has a relatively thin central region. Said tray may furthermore be divided into several compartments.

### General disclosure of the invention

An object of the present invention is to address the shortcomings of the prior art and to provide a method and a package for pasteurizing and vacuum-packing food which offer more freedom to suit a larger variety of food and servings while maintaining sufficient keeping-qualities and ease of cooking. Another object of the invention is to essentially maintain costs.

The present invention is based on the insight that when food is distributed such that the volume of food is larger at the edges of a package the food will be more evenly heated during preparation since more microwave energy is provided at the edges than in the centre of a volume of food. Furthermore the inventors have realized that the package may be designed such that the food is automatically distributed accordingly during the process of pasteurizing and vacuum-packing and that this may be achieved for a package with multiple compartments.

These and other objects are achieved by the invention as defined by the independent claims. Example embodiments are set forth in the dependent claims, the description and the drawings.

According to a first aspect of the present invention there is provided a method of pasteurizing and vacuum packing food which comprises the steps of providing a tray with a first separating barrier which divides the tray into a first compartment and a second compartment. Both the first compartment and the second compartment each have a flexible bottom, e.g. a first flexible bottom and a second flexible bottom. The barrier is formed such that it has a first channel which connects the first compartment with the second compartment. The food is placed in the first compartment and in the second compartment and the tray with food is covered with a flexible cover layer to form a package. A one-way valve is provided for one-directional communication from the interior of the package to the exterior thereof. The contents inside the package are pasteurized by means of microwave radiation and the valve is closed upon pasteurization of the package, allowing the package to cool. Thereby, a vacuum is created in the package in such a manner that the package with the vacuum-packaged food therein presents a first compartment central portion and a second compartment central portion, wherein, at the first compartment, a distance between the flexible cover layer and the first flexible bottom is shorter than a distance p₁ between the flexible cover layer and the first flexible bottom at the peripheral edges of the first compartment, and wherein, at the second compartment, a distance between the flexible cover layer and the second flexible bottom is shorter than a distance between the flexible cover layer and the second flexible bottom at the peripheral edges of the second compartment. Thereby, the first flexible bottom is caused to be concave relative the first compartment and the second flexible bottom is caused to be concave relative to the second compartment.

The effect of the transfer of the food to the package taking place prior to the pasteurization step is that the risk of contamination of the food is reduced. The pasteurization takes place under excess pressure inside the package, and it is mostly vapour that exits through the valve. As the heating stops, the valve closes and the package is cooled, whereby a vacuum is created inside the package due to condensation. Without being bound by any theory, it is believed that a generation of vacuum is commenced, i.e. vapour in the package is condensed by cooling, as soon as the valve is closed. Since the package is formed with a first and a second flexible bottom and since also the cover layer is flexible, each compartment of the package will, once a vacuum is established inside the package, have a distance from the flexible cover layer to its flexible bottom that is shorter than the height of the compartment's peripheral edges. When the packaged food is to be prepared for consumption or be heated, this difference in distance will result in the food in the package being evenly heated, since more microwave energy will be supplied to the edges, where the quantity of food is the largest, and less energy will be supplied to the middle, where there is less food. In conventional packages for ready-to-eat dishes the distance between the cover layer and the bottom is equal throughout the entire package.

The barrier provides for separate compartments, which allows the method to be used for preparing ready-to-eat meals with ingredients, dishes or servings that are preferably not mixed. Alternatively the method may be used for preparing ready-to-eat dishes for more than one person.

Furthermore, the first channel enables the transfer of gases or vapour between the first and the second compartment, while the barrier essentially prevents the food of the first compartment from mixing with the food of the second compartment.

It is to be noted that the step of closing the valve upon pasteurization of the package typically is carried out upon completed pasteurization of the package. However, in the context of the present invention, the step of pasteurizing the contents inside the package may be considered as a transition phase in the sense that the pasteurization of the package may continue inside the package as long as the temperature is sufficiently high to thermally destroy (i.e. kill) any microorganism inside the package. Without being bound by any theory, it is believed that pasteurization occurs above a temperature of 70 degrees C. Hence, the term "completed pasteurization" refers to the condition that the heating (by e.g. microwaves) of the contents inside the package is ceased, i.e. active pasteurization, while the contents inside the package may still be subjected to passive pasteurization due to the high temperature of the contents. According to a second aspect of the present invention there is provided a package for containing pasteurizing and vacuum packing food comprising a tray having a first separating barrier dividing the tray into a first compartment and a second compartment for containing the pasteurizing and vacuum packing food. The first compartment has a first flexible bottom and a first stiff lateral wall extending in the vertical direction of the tray. The second compartment has a second flexible bottom and a second stiff lateral wall extending in the vertical direction of the tray. The first separating barrier is provided with a first channel for transferring gas and/or vapour between the first and the second compartments. Moreover, the tray is covered by a flexible cover layer to form the package. The flexible cover layer is provided with a closed one-way valve for one directional communication from the interior of the package to the exterior thereof. Furthermore, the package with the vacuum-packaged food therein presents a first compartment central portion and a second compartment central portion, wherein, at the first compartment, a distance between the flexible cover layer and the first flexible bottom is shorter than a distance between the flexible cover layer and the first flexible bottom at the peripheral edges of the first compartment, and wherein, at the second compartment, a distance between the flexible cover layer and the second flexible bottom is shorter than a distance between the flexible cover layer and the second flexible bottom at the peripheral edges of the second compartment. Thereby, the first flexible bottom is caused to be concave relative the first compartment and the second flexible bottom is caused to be concave relative to the second compartment.

Although not strictly required, it is to be noted that the vacuum and the vacuum-packaged food of the package typically is obtained by the method described herein. Hence, effects and features of this second aspect of the present invention are largely analogous to those described above in relation to the first aspect of the present invention.

Typically, the tray is made of a suitable polymer in order to render the bottom flexible. One example of a suitable polymer for the tray is polypropylene. However, other polymers are conceivable as long as the bottoms are sufficiently flexible to become concave relative to the compartment when a vacuum is created inside the package.

One example of a suitable material for the flexible cover layer may be a laminate of polypropylene and polyamide. However, the flexible cover layer may be made of other suitable polymers or plastic film materials as long as the flexible cover layer is sufficiently flexible to ensure a proper function of the cover layer.

According to one example embodiment of the invention, the first channel may be formed as a recessed groove in the barrier. The recessed groove is a cost- and manufacturing-efficient means of allowing gas and/or vapour to pass between the first and the second compartment while leaving other sections of the barrier to be sealed with the flexible cover. Additionally, having a recessed groove as a first channel on for example the upper edge of the barrier brings the added advantage that there is a lowered risk of getting the channel blocked by food, compared to a channel or a hole through a lower part of the barrier. As such, the recessed groove may be arranged on the upper edge of the barrier.

According to another example embodiment of the invention, the first channel may be formed by a non-heat sealed portion of the barrier. As an example, the first channel is formed on the upper edge of the barrier between a first heat sealed portion and a second heat sealed portion. In other words, the first channel is defined by the non-heat sealed portion of the barrier and an inner surface of the flexible cover layer (i.e. the surface facing the edge of the barrier). The flexible cover layer may for example constitute an upper surface of the channel, opposite the lower surface of the barrier.

The tray may preferably have stiff lateral walls extending in the vertical direction of the tray such that a first lateral wall together with the first barrier encircles the first compartment. Analogously, a second lateral wall together with the first barrier thus encircles the second compartment.

According to one example embodiment of the invention, the first flexible bottom may be more flexible than the first lateral wall and the barrier. Similarly, the second flexible bottom may be more flexible than the second lateral wall and the barrier.

The stiff lateral walls further enables the convex shape of the first and the second flexible bottom in that the bottom is more prone to flex in the compartment central portion than at the wall, which is more stiff than the bottom.

Preferably, the one-way valve may be provided on the flexible cover layer. This arrangement presents the advantage of preventing any food from blocking the valve, since during heating the pressure increase due to the vapour being generated will lift the cover layer to a level above the food.

In order to simplify the manufacturing process, the valve may be arranged on the flexible cover layer before the latter is applied on top of the tray. In one example embodiment, the one-way valve may comprise a slit formed in the flexible cover layer and a resealable adhesive film extending across the slit. The one-way valve may thus be implemented in a cost efficient manner which requires few additional production steps.

The valve may be arranged on a portion of the flexible cover layer which is covering the first compartment.

Due to the principle of using the first channel, there is a potential to save resources by providing a one-way valve over the first compartment only. In addition, the first channel will provide (and ensure) a means for gas and/or vapour exchange between the first compartment and the second compartment, so that a vacuum is created in both the first and the second compartment during cooling after pasteurization.

In addition, or alternatively, the one-way valve may be arranged to emit a sound signal when vapour is flowing through the valve. This may be used to signal a consumer that the multi-compartment ready-to-eat dish is warm and cooked for eating.

According to one example embodiment of the method, the step of placing the food in the first compartment and in the second compartment may comprise the step of placing a first serving of food up to a filling degree of 20-80% in the first compartment. Preferably the first compartment may be filled to a filling degree of 30-70%. Most preferably, the first compartment may be filled to a filling degree of 50-70%. In addition, or alternatively, the step of placing the food in the first compartment and in the second compartment, may comprise the step of placing a second serving of food up to a filling degree of 20-80% in the second compartment. Preferably the second compartment may be filled to a filling degree of 30-70%. Most preferably, the second compartment may be filled to a filling degree of 50-70%.

In the context of the invention, a first and a second serving of food may be understood as separate components or ingredients necessary for a ready-to-eat dish. However, the first serving and the second serving may also each be a full portion of a ready-to-eat dish. Depending on preferences, the first serving of food and the second serving of food may be equal in volume or one may be larger in volume than the other. The size of the first compartment and the second compartment may preferably be adapted accordingly.

Filling the food in a compartment to a lower filling degree than the compartment is capable of enables a distribution of food toward the peripheral edges of the compartment which is better than the distribution of food that would be possible with a full compartment. Better in terms of distributing the food towards the edges where more microwave energy will be applied during heating.

In the step of covering the tray with a flexible cover layer to form a package, the first compartment and the second compartment may be individually sealed in a manner sufficient for preventing the food from transferring between the compartments. Typically, the flexible cover layer is heat sealed to the compartments. For example the cover layer may be adhered to the peripheral edges of the tray and additionally adhered to at least a section of the separating barrier.

In this manner, the channel may be formed by a section of the barrier that is not heat sealed to the flexible cover layer. Alternatively, the channel is formed by the recessed groove as mentioned above.

The first channel may advantageously be further defined by the cover layer. The cover layer may for example constitute an upper surface of the channel, opposite the lower surface of the recessed groove.

In one example embodiment of the invention, the first channel may be arranged such that the vacuum occurring in the package will seal the first channel. The channel may be at least partly flexible so that the vacuum will plastically- or elastically deform the channel and at least partly close the channel.

In other words, the first channel may be sealed by the flexible cover layer upon vacuum in the package created from pasteurization of the package and cooling of the package.

This has the effect that the first and the second compartments are sealed from each other when the content of the package is under vacuum. During heating the channel will open again so that gases and vapor may transfer between each compartment again.

Further features of, and advantages with, the present invention will become apparent when studying the appended claims and the following description. The skilled person may realize that different features of the present invention may be combined to create embodiments other than those described in the following, without departing from the scope of the present invention.

### Brief description of the drawings

The invention will be described in more detail in the following by means of one example embodiment with reference to the accompanying drawings, wherein:
Figs 1a-1f illustrate the method of pasteurizing and vacuum-packing food in accordance with the present invention.
Figs 2a-2b illustrate the package during the final heating.
Fig 3 illustrates one example of a production line that may be used in the implementation of the method in accordance with the present invention.
Figs 4a-4b are perspective views of the tray as seen obliquely from below, illustrating the latter in a normal condition stage and a vacuum-condition stage, respectively.
Fig 5 is an exploded perspective view of a tray according to an example embodiment of the invention.

It should be understood that the drawings are not true to scale and, as is readily appreciated by a person skilled in the art, dimensions other than those illustrated in the drawings are equally possible within the scope of the invention. Moreover, it should be readily understood that some details in the drawings may be exaggerated in comparison with other details.

### Detailed description of Exemplary Embodiments of the Invention

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference characters refer to like elements throughout the description.

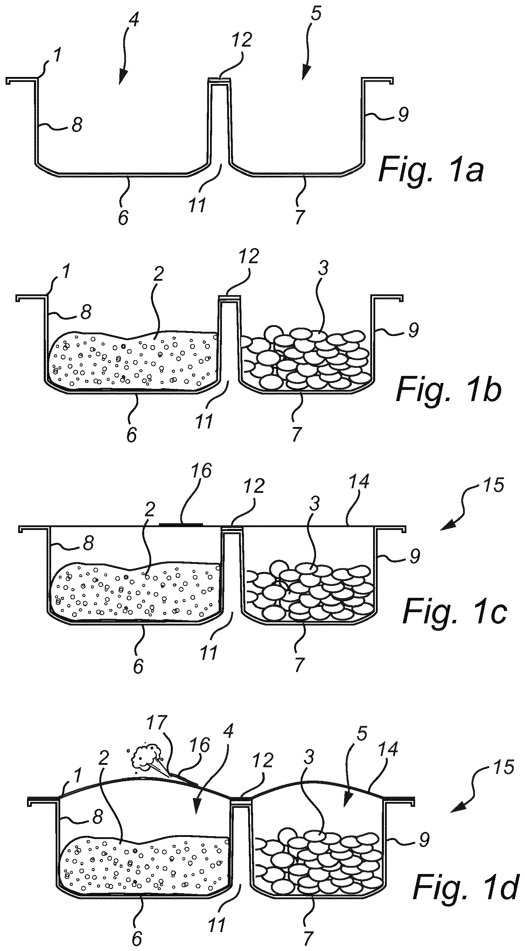

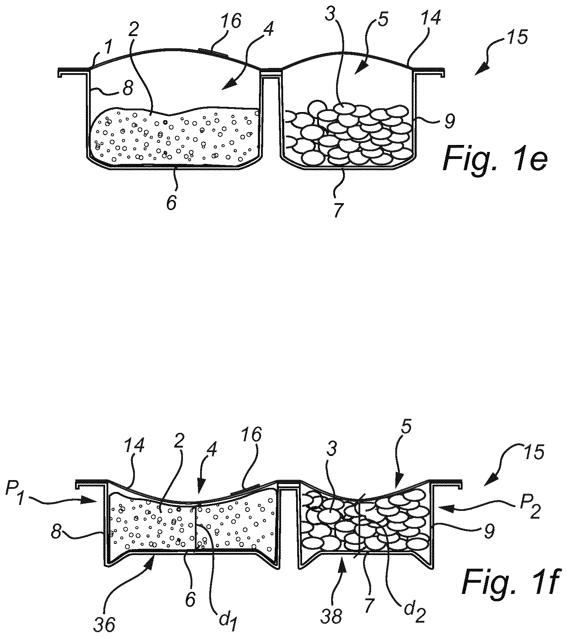

Referring now to the figures and Fig. 1 a in particular, there is depicted a tray 1 with two separate compartments 4, 5, i.e. a first compartment 4 and a second compartment 5 which are filled with desired servings of food 2, 3, as illustrated in Fig. 1b, each to a filling degree of about 50-70% of the respective compartment 4, 5. However, it is to be noted that the filling degree typically depends on the kind of food 2, 3 to be packed. Hence, the filling degree may in various example embodiments vary from 20-80% of the respective compartments 4, 5. A first separating barrier 11 is provided on the tray, which divides the tray 1 into the first compartment 4 and the second compartment 5. Fig 1c shows the manner of application on the tray 1 of a flexible cover layer 14 fitted with a one-way valve 16. The package 15 thus formed is then exposed to the effects of microwaves whereby the food 2, 3 in each compartment 4, 5 is pasteurized, Fig 1d, and the valve 16 permits vapour to exit from the package 15. The valve 16 is in the form of a tape applied across a slit made in the flexible cover layer 14. At the same time as the heating by means of the microwaves ceases, the valve 16 closes, see Fig 1 e. Preferably the movable part 17 of the valve 16, i.e. the adhesive layer 17, is designed to automatically reclose the valve, when the heating ceases and the excess pressure inside the package 15 decreases somewhat. Alternatively, this effect could be achieved by purely mechanical means that close the valve 16 as the package is being conveyed on a production line. Owing to the condensation arising inside the package 15 a vacuum pressure is generated therein, see Fig 1f. The effect of the combination of predetermined degrees of filling of the compartments 4,5 and the fact that each bottom 6, 7 respectively of the first compartment 4 and the second compartment 5 and the cover layer 14 are flexible is that in the centre part of each compartment the distance d₁ and d₂ between the flexible cover layer 14 and the bottom 6, 7 will be shorter than the distance p₁ and p₂ between the flexible cover layer 14 and the bottom 6, 7 in the peripheral parts of the respective compartment 4, 5. More specifically, the package is provided with a first compartment central portion 36 and a second compartment central portion 38 as illustrated in Fig. 1f, wherein at the first compartment 4 the distance d₁ between the flexible cover layer 14 and the first flexible bottom 6 is shorter than the distance p₁ between the flexible cover layer 14 and the first flexible bottom 6 at the peripheral edges 8 of the first compartment 4. Analogously, at the second compartment 5, the distance d₂ between the flexible cover layer 14 and the second flexible bottom 7 is shorter than the distance p₂ between the flexible cover layer 14 and the second flexible bottom 7 at the peripheral edges 9 of the second compartment 5.

The tray 1 is preferably formed with rigid (or stiff) lateral rims (or walls) 8, 9, such that the change of volume in each compartment consequently will be caused by vacuum influence to the bottom 6, 7 and the flexible cover layer 14.

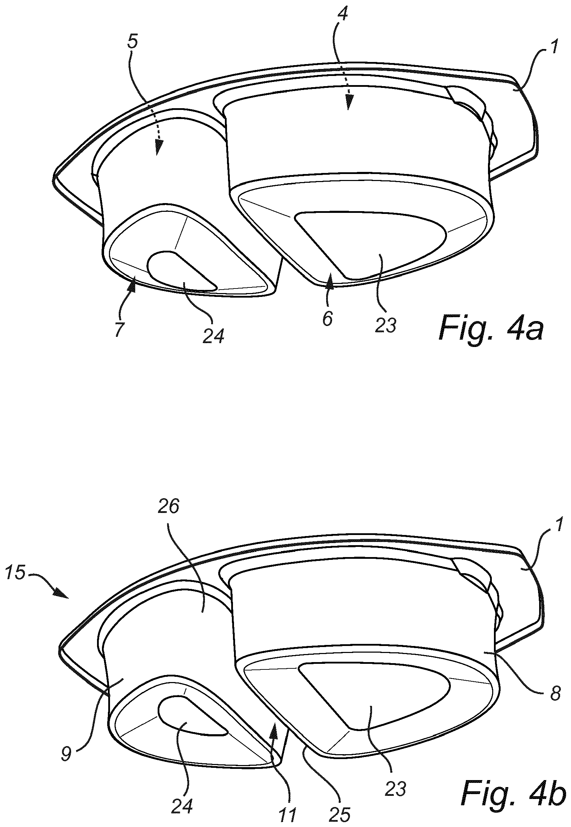

As is illustrated in for instance Figs 1a-1f or Fig. 4, the tray 1 may preferably have stiff lateral walls 8, 9 extending in the vertical direction of the tray 1 such that a first lateral wall 8 together with the first barrier 11 encircles the first compartment 4. Analogously, a second lateral wall 9 together with the first barrier 11 thus encircles the second compartment 5.

Accordingly, and as mentioned above, the first separating barrier 11 divides the tray 1 into the first compartment 4 and the second compartment 5 for containing the pasteurizing and vacuum packing food 2, 3. The first compartment 4 has a first flexible bottom 6 and a first stiff lateral wall 8 extending in the vertical direction of the tray 1. The second compartment 5 has a second flexible bottom 7 and a second stiff lateral wall 9 extending in the vertical direction of the tray. The first separating barrier 11 is provided with a first channel 12 for transferring gas and/or vapour between the first and the second compartments. Moreover, the tray 1 is covered by a flexible cover layer 14 to form the package 15. In the step of covering the tray 1 with a flexible cover layer 14 to form a package 15, the first compartment 4 and the second compartment 5 may be individually sealed in a manner sufficient for preventing the food from transferring between the compartments. Typically, the flexible cover layer 14 is heat sealed to the compartments 4, 5. For example the flexible cover layer may be adhered to the peripheral edges of the tray 1 and additionally adhered to at least a section of the separating barrier. In this manner, the first channel may be formed by a section of the barrier that is not heat sealed to the flexible cover layer. Alternatively, the channel is formed by the recessed groove as mentioned hereinafter.

The first channel here is further defined by the flexible cover layer 14. The cover layer may for example constitute an upper surface of the channel, opposite the lower surface of the recessed groove.

The flexible cover layer 14 is provided with a closed one-way valve 16 for one directional communication from the interior of the package to the exterior thereof.

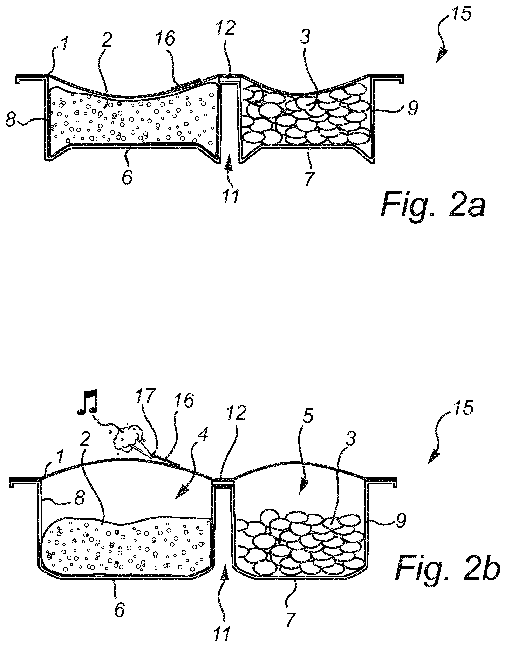

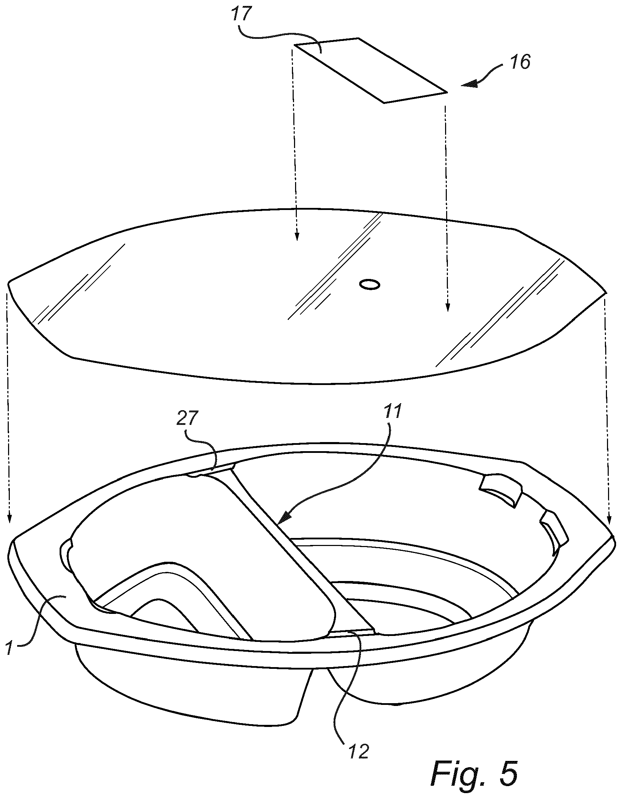

The arrangement of the channel 12 is shown in Figs. 1a-1f, 2a-2b and/or in Fig. 5. In one example embodiment, the channel 12 may be formed as a recessed groove in the barrier. Alternatively, the channel 12 may be formed by a non-heat sealed portion of the barrier. As may gleaned from the Figs. 1a-1f, 2a-2b and/or in Fig. 5, the first channel 12 here is formed on the upper edge of the barrier 11. As an example, the first channel 12 may be formed between a first heat sealed portion and a second heat sealed portion of the barrier edge. In other words, the first channel is defined by the non-heat sealed portion of the barrier and an inner surface of the flexible cover layer (i.e. the surface facing the edge of the barrier).

When a package 15, prepared by implementation of the method set forth above, is to be heated preparatory to final consumption of the food 2, 3 enclosed in each compartment 4, 5 of the package 15, the latter is positioned inside a microwave oven. After a while, vapour is generated inside the package and dispersed, see Fig 2a, within and between the compartments 4,5, thus contributing to heating the food evenly. The design of the package 15 in this example embodiment, with two compartments 4, 5 and a separating barrier 11 with a first channel 12 connecting the first compartment 4 and the second compartment 5, wherein each compartment 4, 5 has a compartment centre 36, 38 that is thinner than the compartment edges, furthermore contributes to the food being heated more evenly, since in a conventional microwave oven the microwaves are concentrated to the edges of a package. Preferably, the valve 16 is adapted to open when the first- and second serving of food 2, 3 inside the package 15 have reached their fully heated state. In accordance with an example embodiment of the present invention, the valve 16 is designed to emit a sound signal when vapour flows through the valve 16, see Fig 2b. In other words, the sound signal indicates that the contents of the package are ready to be consumed.

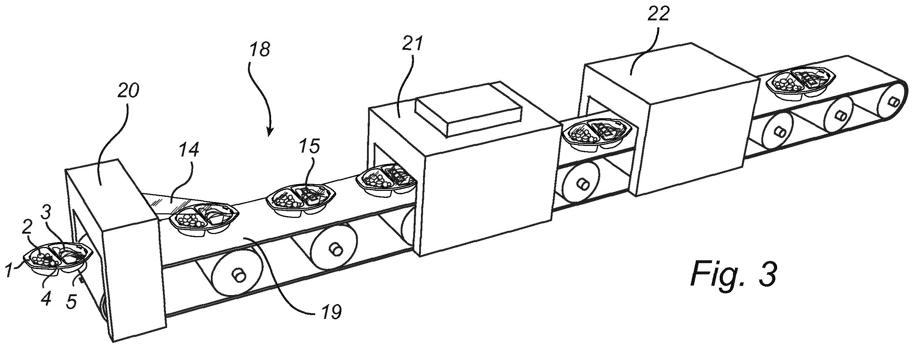

Fig 3 shows one example of a production line 18, comprising a conveyor belt 19, a cover layer applicator 20, a microwave tunnel 21 and a cooling tunnel 22. A tray 1, filled with food 2, 3 to the desired filling degree in each compartment 4, 5, is placed on the belt 19. A flexible film or cover layer 14 is applied on top of the tray 1 in the cover layer applicator 20 and thereafter the package 15 thus formed is introduced into the microwave tunnel 21, wherein the servings of food 2, 3 contained in the package 15 are pasteurized. At the stage where the package 15 enters the microwave tunnel 21 the valve 16 formed in the package is in a closed state. The food 2, 3 is heated inside the microwave tunnel 21 and the pressure gradually increases in both compartments 4, 5, until it exceeds a predetermined value in response to which the valve 16 is arranged to open, wherein gas and/or vapour may escape through the valve 16 over the first compartment 4. The first channel 12 provides a means for the gas and/or vapour in the second compartment 5 to escape to the first compartment 4, whereby the pressure may be at least partly equalized between the compartments 4, 5. The residence time in the microwave tunnel 21 is set to ensure achievement of optimum food-pasteurization results. At the end of the microwave tunnel 21, the valve 16 closes. More specifically, when the package 15 with the thus pasteurized servings of food 2, 3 contained therein leaves the microwave tunnel 21, the pressure inside the package 15 is reduced, whereby the valve 16 becomes closed. Thereafter, the vapour is condensed due to the closed valve 16, whereby a vacuum pressure is generated in both compartments 4, 5 of the package. By forwarding the package 15 to a cooling tunnel 22, the speed of the condensation process is increased such that vacuum is obtained in a more efficient manner. Above all, the cooling tunnel 22 contributes to reducing the exterior temperature around the package 15 such that the interior temperature of the package is reduced.

In this context of the present invention, a vacuum pressure is generated in both compartments 4, 5 and transferred through the first channel (not seen in fig 3) for at least partial pressure equalization. The package 15 is now ready for further distribution to selling points. It is thus possible to use the method in an industrial process with the advantage of it being a continuous process. The time required for packaging inclusive of preparation (pasteurization) of the food amounts to some minutes. In comparison with conventional methods on the market, the time requirements for the steps of pasteurization and vacuum-packing of food in accordance with the present invention are but a fraction of the time necessary in conventional methods and in addition the food-keeping qualities are higher.

Fig 4a shows a tray 1 in a perspective view as seen obliquely from below under conditions of equal pressure around the tray 1. One section 23 of the first bottom 6 of the tray 1 is flat, under the first compartment 4. Similarly, one section 24 of the second bottom 7 of the tray 1 is also flat, under the second compartment 5. The flat sections 23, 24 give each compartment 4, 5 of the tray 1 sufficient stability to allow the food to be eaten straight from tray 1. When a vacuum pressure is present in the package 15, as shown in Fig 4b, said flat sections 23, 24 and adjoining sections have bulged upwards into the respective compartment 4, 5 of the package 15. Also in this condition the package 15 assumes a stable position but now it rests on the edges surrounding each bottom 6, 7 of the tray 1, because of the stiffness of the walls or rims 8, 9 and barrier 11 of the tray 1. The barrier 11 is preferably separating the first compartment 4 and the second compartment 5, such that a first wall 25 of the barrier, which is comprised in the peripheral encircling rim of the first compartment 4, is at least partly distanced from a second wall 26 of the barrier, which is comprised in the peripheral encircling rim of the second compartment 5. Additionally the barrier is provided with a first channel (not shown in figures 4a-b) on the edge facing the flexible cover layer (not shown in figures 4a-b). Owing to these design features of the tray 1, the latter becomes stackable, both when it is used as a part of the package 15 and when stored prior to use.

Fig 5 shows an exploded perspective view of a tray 1 according to an example embodiment. The tray 1 is provided with a valve 16 formed by an adhesive layer 17 and a slit or hole in the cover layer 14. The adhesive layer is placed over the slit. The flexible cover layer 14 may be adhered to the tray 1 by for example welding the cover layer to a surface along the peripheral edge of the tray and at least a section of the surface of the barrier 11 facing the flexible cover layer 14, leaving a first channel 12 and a second channel 27 to connect the first compartment 4 with the second compartment 5 when the package is formed. The first channel 12 and the second channel 27 are formed by a first and a second recessed grove 12, 27 in the barrier 11, and the flexible cover layer 14 when it is placed on the tray. The section of the barrier 11 which has the flexible cover layer 14 adhered to it when the package 15 is formed is preferably larger than the first and second recessed grove 12, 27 so that the food servings in the compartments 4, 5 are essentially prevented from mixing. The flexible cover layer may be bonded to the tray 1 by various methods capable of providing a pressure resistant bond, such as for example welding or gluing/adhesive.

As should be appreciated, numerous modifications of the example embodiment described above are possible within the scope of protection of the invention as the latter is defined by the appended claims. For example, as described above a valve comprising a diaphragm and a diaphragm holder could be used. The flat sections 23, 24 of each of the bottoms 6, 7 of the tray 1 could, as an alternative, have for example a corrugated structure or a similar structure, provided that the sections of each bottom 6, 7 in contact with the supporting surface impart stability to the tray 1. The barrier 11 may have a first 25 and a second wall 26 that are parallel or at an angle to each other, the latter forming a wedge shaped barrier as seen in a cross section of the tray 1. The preferred shape, angle and inter-distance of the barrier's walls may be depending on the type of food in each compartment as the separation of the compartments may affect the heating characteristics in a microwave oven. Furthermore, a tray 1 could of course be divided into several additional compartments, vegetables for instance being contained in one compartment, sauce in another, and so on. With several additional compartments the package is preferably provided with further separating barriers and further channels to connect the compartments. Each barrier may be provided with at least one channel or alternatively a barrier may share a channel with one or more other barriers. With three compartments for instance, a first-, a second-and a third separating barrier may be arranged so that each barrier goes from a point at a peripheral edge of the tray to a common point closer to a central section of the tray where the barriers meet, wherein a common first channel may be arranged so that the barriers share a first channel at the common point. Also in this instance the package may be presented the advantage to limit the number of valves to a single valve over one of the compartments, through the provision of at least one connecting channel between the compartments. Owing this design packages according to the invention are more cost- and environment efficient as compared to a package with several valves.

The size of each compartment may vary for example depending on the type of food or a preferred size of serving. Accordingly the area of for example the bottom and/or the height of the encircling rim for each compartment may be varied individually. The invention has for its primary object to suggest methodical means for the pasteurization and the vacuum-packing of food in containers of a size suitable for heating in conventional microwave ovens for home use. Consequently, it is of course possible to apply the method on larger-size packages for institutional catering kitchens, wherein the packages used are too large to be accommodated in conventional home-use microwave ovens. Cooling of the package following the pasteurization step could be passive, i.e. the package may be left to cool in ambient temperatures. For rapid processes it is, however, preferably to cool actively, for example in a cooling tunnel as described above.

Although not explicitly shown in the Figures, it is also conceivable that in all example embodiments of the present invention, the first channel 12 may be sealed by the flexible cover layer 14 upon vacuum in the package 15 created from pasteurization of the package (15) and cooling of the package 15.

Thanks to the present invention, as described above with references to the various figures, it becomes possible to provide a method and package that allows for separate servings in one single package while maintaining keeping-qualities, ease of cooking and manufacturing costs. More specifically, since the package is formed with a first and a second flexible bottom and since also the cover layer is flexible, each compartment of the package will, once a vacuum is established inside the package, have a distance from the flexible cover layer to its flexible bottom that is shorter than the height of the compartment's peripheral edges. As such, when the packaged food is to be prepared for consumption or be heated, this difference in distance will result in the food in the package being evenly heated, since more microwave energy will be supplied to the edges, where the quantity of food is the largest, and less energy will be supplied to the middle, where there is less food. In conventional packages for ready-to-eat dishes the distance between the cover layer and the bottom is equal throughout the entire package. Moreover, the barrier provides for separate compartments, which allows the method to be used for preparing ready-to-eat meals with ingredients, dishes or servings that are preferably not mixed. Alternatively the method may be used for preparing ready-to-eat dishes for more than one person. Furthermore, the first channel enables the transfer of gases or vapour between the first and the second compartment, while the barrier essentially prevents the food of the first compartment from mixing with the food of the second compartment.

The above description of the example embodiment of the present invention and the accompanying drawings are to be regarded as a non-limiting example of the invention and the scope of protection is defined by the appended claims. Any reference sign in the claims should not be construed as limiting the scope.

## Claims

1. A method of pasteurizing and vacuum packing food (2, 3), comprising the following steps:
- providing a tray (1) having a first separating barrier (11) dividing the tray (1) into a first compartment (4) and a second compartment (5), the first compartment (4) having a first flexible bottom (6), the second compartment (5) having a second flexible bottom (7) and the first barrier (11) having a first channel (12) connecting the first compartment (4) with the second compartment (5);
- placing the food (2, 3) in the first compartment (4) and in the second compartment (5);
- covering the tray (1) with a flexible cover layer (14) to form a package (15);
- providing a one-way valve (16) for one directional communication from the interior of the package (15) to the exterior thereof;
- pasteurizing the contents inside the package (15) by means of microwaves;
- closing the valve (16) upon pasteurization of the package (15) and allowing the package (15) to cool, whereby a vacuum is created in the package (15) in such a manner that the package (15) with the vacuum-packaged food (2, 3) therein presents a first compartment central portion (36) and a second compartment central portion (38), wherein, at the first compartment (4), a distance (d₁) between the flexible cover layer (14) and the first flexible bottom (6) is shorter than a distance (p₁) between the flexible cover layer (14) and the first flexible bottom (6) at the peripheral edges (8) of the first compartment (4), and wherein, at the second compartment (5), a distance (d₂) between the flexible cover layer (14) and the second flexible bottom (7) is shorter than a distance (p₂) between the flexible cover layer (14) and the second flexible bottom (7) at the peripheral edges (9) of the second compartment (5), and thus causing the first flexible bottom (6) to be concave relative the first compartment (4) and the second flexible bottom (7) to be concave relative the second compartment (5).

2. The method according to any one of the preceding claims, wherein the tray (1) has stiff lateral walls (8, 9) extending in the vertical direction of the tray (1) such that a first lateral wall (8) together with the first barrier (11) encircles the first compartment (4), and a second lateral wall (9) together with the first barrier (11) encircles the second compartment (5).

3. The method according to any one of the preceding claims, wherein the one-way valve (16) is arranged on the flexible cover layer (14).

4. The method according to claim 3, wherein the one-way valve (16) is arranged on a portion of the flexible cover layer (14) covering the first compartment (4).

5. The method according to any one of the claims 3-4, wherein the one-way valve (16) is applied on the flexible cover layer (14) during the step of covering said tray (1) with the flexible cover (14) to form a package (15).

6. The method according to any one of the preceding claims, wherein the step of covering the tray (1) with a flexible cover layer (14) to form a package (15) comprises that the first compartment (4) and the second compartment (5) are individually sufficiently sealed for preventing the food (2, 3) from transferring between the compartments (4, 5).

7. The method according to any one of the preceding claims, wherein the step of placing the food (2, 3) in the first compartment (4) and in the second compartment (5), comprises the following steps:
- placing a first serving of food (2) up to a filling degree of 20-80% in the first compartment (4), preferably to a filling degree of 30-70% in the first compartment (4), and most preferably to a filling degree of 50-70% in the first compartment (4); and
- placing a second serving of food (3) up to a filling degree of 20-80% in the second compartment (5), preferably to a filling degree of 30-70% in the second compartment (5), and most preferably to a filling degree of 50-70% in the second compartment (5).

8. The method according to any one of the preceding claims, wherein the first channel (12) is formed as a recessed groove on the barrier (11).

9. A package (15) containing pasteurized and vacuum packaged food (2, 3), said package comprising a tray (1) having a first separating barrier (11) dividing the tray (1) into a first compartment (4) and a second compartment (5) containing the pasteurized and vacuum packaged food (2, 3);
the first compartment (4) having a first flexible bottom (6) and a first stiff lateral wall (8) extending in the vertical direction of the tray (1), the second compartment (5) having a second flexible bottom (7) and a second stiff lateral wall (9) extending in the vertical direction of the tray (1);
wherein the tray (1) is covered by a flexible cover layer (14) to form the package (15), the flexible cover layer (14) is provided with a closed one-way valve (16) for one directional communication from the interior of the package (15) to the exterior thereof;
wherein the package (15) with the vacuum-packaged food (2, 3) therein presents a first compartment central portion (36) and a second compartment central portion (38), wherein, at the first compartment (4), a distance (d₁) between the flexible cover layer (14) and the first flexible bottom (6) is shorter than a distance (p₁) between the flexible cover layer (14) and the first flexible bottom (6) at the peripheral edges (8) of the first compartment (4), and wherein, at the second compartment (5), a distance (d₂) between the flexible cover layer (14) and the second flexible bottom (7) is shorter than a distance (p₂) between the flexible cover layer (14) and the second flexible bottom (7) at the peripheral edges (9) of the second compartment (5), and thus causing the first flexible bottom (6) to be concave relative the first compartment (4) and the second flexible bottom (7) to be concave relative the second compartment (5), **characterised in that** the first separating barrier (11) is provided with a first channel (12) for transferring gas and/or vapour between the first and the second compartments(4, 5).

10. The package (15) according to claim 9, wherein the first flexible bottom (6) is more flexible than the first lateral wall (8) and the barrier (11), and the second flexible bottom (7) is more flexible than the second lateral wall (9) and the barrier (11).

11. The package (15) according to any one of the claims 9-10, wherein the flexible cover layer (14) is adhered to the peripheral edge (8) of the first compartment (4) and to the peripheral edge (9) of the second compartment (5), and to the barrier (11).

12. The package (15) according to any one of the claims 9-11, wherein the first channel (12) of the barrier (11) is further defined by the cover layer (14).

13. The package (15) according to any one of the claims 9-12, wherein the first channel (12) is sealed by the flexible cover layer (14) upon vacuum in the package (15) created from pasteurization of the package (15) and cooling of the package (15).

14. The package (15) according to any one of claims 9-13, wherein the one-way valve (16) is arranged on a portion of the flexible cover layer (14) covering the first compartment (4).

15. The package (15) according to any one of the claims 9-14, wherein the one-way valve (16) comprises a slit formed in the flexible cover layer (14) and a resealable adhesive film (17) extending across the slit.

## Patentansprüche

1. Verfahren zum Pasteurisieren und Vakuumverpacken von Lebensmitteln (2, 3), das die folgenden Schritte umfasst:
- Bereitstellen einer Schale (1) mit einer ersten Trennbarriere (11), welche die Schale (1) in ein erstes Abteil (4) und ein zweites Abteil (5) unterteilt, wobei das erste Abteil (4) einen ersten flexiblen Boden (6) aufweist, das zweite Abteil (5) einen zweiten flexiblen Boden (7) aufweist und die erste Barriere (11) einen ersten Kanal (12) aufweist, der das erste Abteil (4) mit dem zweiten Abteil (5) verbindet;
- Anordnen der Lebensmittel (2, 3) in dem ersten Abteil (4) und dem zweiten Abteil (5);
- Abdecken der Schale (1) mit einer flexiblen Abdeckschicht (14), um eine Packung (15) auszubilden;
- Bereitstellen eines Rückschlagventils (16) für eine Einrichtungsverbindung vom Inneren der Packung (15) zum Äußeren derselben;
- Pasteurisieren der Inhalte im Inneren der Packung (15) mithilfe von Mikrowellen;
- Schließen des Ventils (16) nach der Pasteurisierung der Packung (15) und Abkühlenlassen der Packung (15), wodurch in der Packung (15) ein Vakuum derart erzeugt wird, dass die Packung (15) mit den vakuumverpackten Lebensmitteln (2, 3) darin einen mittigen Abschnitt des ersten Abteils (36) und einen mittigen Abschnitt des zweiten Abteils (38) aufweist, wobei an dem ersten Abteil (4) ein Abstand (d₁) zwischen der flexiblen Abdeckschicht (14) und dem ersten flexiblen Boden (6) kürzer ist als ein Abstand (p₁) zwischen der flexiblen Abdeckschicht (14) und dem ersten flexiblen Boden (6) an den Umfangsrändern (8) des ersten Abteils (4) und wobei an dem zweiten Abteil (5) ein Abstand (d₂) zwischen der flexiblen Abdeckschicht (14) und dem zweiten flexiblen Boden (7) kürzer ist als ein Abstand (p₂) zwischen der flexiblen Abdeckschicht (14) und dem zweiten flexiblen Boden (7) an den Umfangsrändern (9) des zweiten Abteils (5), was bewirkt, dass der erste flexible Boden (6) bezogen auf das erste Abteil (4) konkav ist und der zweite flexible Boden (7) bezogen auf das zweite Abteil (5) konkav ist.

2. Verfahren nach einem der vorhergehenden Ansprüche, wobei die Schale (1) steife Seitenwände (8, 9) aufweist, die sich derart in der vertikalen Richtung der Schale (1) erstrecken, dass eine erste Seitenwand (8) zusammen mit der ersten Barriere (11) das erste Abteil (4) umschließt und eine zweite Seitenwand (9) zusammen mit der ersten Barriere (11) das zweite Abteil (5) umschließt.

3. Verfahren nach einem der vorhergehenden Ansprüche, wobei das Rückschlagventil (16) auf der flexiblen Abdeckschicht (14) angeordnet ist.

4. Verfahren nach Anspruch 3, wobei das Rückschlagventil (16) auf einem Abschnitt der flexiblen Abdeckschicht (14) angeordnet ist, der das erste Abteil (4) abdeckt.

5. Verfahren nach einem der Ansprüche 3-4, wobei das Rückschlagventil (16) während des Schritts des Abdeckens der Schale (1) mit der flexiblen Abdeckung (14), um eine Packung (15) auszubilden, auf die flexible Abdeckschicht (14) aufgebracht wird.

6. Verfahren nach einem der vorhergehenden Ansprüche, wobei der Schritt des Abdeckens der Schale (1) mit einer flexiblen Abdeckschicht (14), um eine Packung (15) auszubilden, umfasst, dass das erste Abteil (4) und das zweite Abteil (5) einzeln ausreichend abgedichtet werden, um zu verhindern, dass die Lebensmittel (2, 3) sich zwischen den Abteilen (4, 5) verlagern.

7. Verfahren nach einem der vorhergehenden Ansprüche, wobei der Schritt des Anordnens der Lebensmittel (2, 3) in dem ersten Abteil (4) und dem zweiten Abteil (5) die folgenden Schritte umfasst:
- Anordnen einer ersten Portion eines Lebensmittels (2) bis zu einem Füllstand von 20-80 % in dem ersten Abteil (4), vorzugsweise bis zu einem Füllstand von 30-70 % in dem ersten Abteil (4) und ganz besonders bevorzugt bis zu einem Füllstand von 50-70 % in dem ersten Abteil (4); und
- Anordnen einer zweiten Portion eines Lebensmittels (3) bis zu einem Füllstand von 20-80 % in dem zweiten Abteil (5), vorzugsweise bis zu einem Füllstand von 30-70 % in dem zweiten Abteil (5) und ganz besonders bevorzugt bis zu einem Füllstand von 50-70 % in dem zweiten Abteil (5).

8. Verfahren nach einem der vorhergehenden Ansprüche, wobei der erste Kanal (12) als eine ausgesparte Nut auf der Barriere (11) ausgebildet ist.

9. Packung (15), die pasteurisierte und vakuumverpackte Lebensmittel (2, 3) enthält, wobei die Packung eine Schale (1) umfasst, die eine erste Trennbarriere (11) aufweist, welche die Schale (1) in ein erstes Abteil (4) und ein zweites Abteil (5) unterteilt, welche die pasteurisierten und vakuumverpackten Lebensmittel (2, 3) enthalten; wobei das erste Abteil (4) einen ersten flexiblen Boden (6) und eine erste steife Seitenwand (8), die sich in der vertikalen Richtung der Schale (1) erstreckt, aufweist und das zweite Abteil (5) einen zweiten flexiblen Boden (7) und eine zweite steife Seitenwand (9), die sich in der vertikalen Richtung der Schale (1) erstreckt, aufweist;
wobei die Schale (1) durch eine flexible Abdeckschicht (14) abgedeckt ist, um die Packung (15) auszubilden, und die flexible Abdeckschicht (14) mit einem geschlossenen Rückschlagventil (16) für eine Einrichtungsverbindung vom Inneren der Packung (15) zum Äußeren derselben versehen ist;
wobei die Packung (15) mit den vakuumverpackten Lebensmitteln (2, 3) darin einen mittigen Abschnitt des ersten Abteils (36) und einen mittigen Abschnitt des zweiten Abteils (38) aufweist, wobei an dem ersten Abteil (4) ein Abstand (d₁) zwischen der flexiblen Abdeckschicht (14) und dem ersten flexiblen Boden (6) kürzer ist als ein Abstand (p₁) zwischen der flexiblen Abdeckschicht (14) und dem ersten flexiblen Boden (6) an den Umfangsrändern (8) des ersten Abteils (4) und wobei an dem zweiten Abteil (5) ein Abstand (d₂) zwischen der flexiblen Abdeckschicht (14) und dem zweiten flexiblen Boden (7) kürzer ist als ein Abstand (p₂) zwischen der flexiblen Abdeckschicht (14) und dem zweiten flexiblen Boden (7) an den Umfangsrändern (9) des zweiten Abteils (5), was bewirkt, dass der erste flexible Boden (6) bezogen auf das erste Abteil (4) konkav ist und der zweite flexible Boden (7) bezogen auf das zweite Abteil (5) konkav ist,
**dadurch gekennzeichnet, dass** die erste Trennbarriere (11) mit einem ersten Kanal (12) zum Leiten von Gas und/oder Dampf zwischen dem ersten und dem zweiten Abteil (4, 5) versehen ist.

10. Packung (15) nach Anspruch 9, wobei der erste flexible Boden (6) flexibler ist als die erste Seitenwand (8) und die Barriere (11) und der zweite flexible Boden (7) flexibler ist als die zweite Seitenwand (9) und die Barriere (11).

11. Packung (15) nach einem der Ansprüche 9-10, wobei die flexible Abdeckschicht (14) an den Umfangsrand (8) des ersten Abteils (4) und den Umfangsrand (9) des zweiten Abteils (5) und an die Barriere (11) angeklebt ist.

12. Packung (15) nach einem der Ansprüche 9-11, wobei der erste Kanal (12) der Barriere (11) ferner durch die Abdeckschicht (14) definiert ist.

13. Packung (15) nach einem der Ansprüche 9-12, wobei der erste Kanal (12) durch die flexible Abdeckschicht (14) abgedichtet ist, nachdem in der Packung (15) infolge einer Pasteurisierung der Packung (15) und eines Abkühlens der Packung (15) ein Vakuum erzeugt wird.

14. Packung (15) nach einem der Ansprüche 9-13, wobei das Rückschlagventil (16) auf einem Abschnitt der flexiblen Abdeckschicht (14) angeordnet ist, der das erste Abteil (4) abdeckt.

15. Packung (15) nach einem der Ansprüche 9-14, wobei das Rückschlagventil (16) einen Schlitz, der in der flexiblen Abdeckschicht (14) ausgebildet ist, und eine wiederverschließbare Klebefolie (17), die sich über den Schlitz hinweg erstreckt, umfasst.

## Revendications

1. Procédé pour la pasteurisation et l'emballage sous vide d'un produit alimentaire (2, 3), comprenant les étapes suivantes :
- mise à disposition d'un plateau (1) présentant une première cloison de séparation (11) divisant le plateau (1) en un premier compartiment (4) et un deuxième compartiment (5), le premier compartiment (4) présentant un premier fond souple (6), le deuxième compartiment (5) présentant un deuxième fond souple (7) et la première cloison (11) présentant un premier canal (12) reliant le premier compartiment (4) au deuxième compartiment (5) ;
- disposition du produit alimentaire (2, 3) dans le premier compartiment (4) et dans le deuxième compartiment (5) ;
- recouvrement du plateau (1) avec une couche de couverture souple (14) pour former un emballage (15) ;
- mise à disposition d'une soupape unidirectionnelle (16) pour une communication unidirectionnelle entre l'intérieur de l'emballage (15) et l'extérieur de celui-ci ;
- pasteurisation du contenu à l'intérieur de l'emballage (15) à l'aide de microondes ;
- fermeture de la soupape (16) lors de la pasteurisation de l'emballage (15) et refroidissement de l'emballage (15), moyennant quoi un vide est créé dans l'emballage (15) de telle façon que l'emballage (15) avec le produit alimentaire (2, 3) emballé sous vide dans celui-ci présente une première partie centrale de compartiment (36) et une deuxième partie centrale de compartiment (38), où, au niveau du premier compartiment (4), une distance (d₁) entre la couche de couverture souple (14) et le premier fond souple (6) est plus courte qu'une distance (p₁) entre la couche de couverture souple (14) et le premier fond souple (6) au niveau des bords périphériques (8) du premier compartiment (4), et où, au niveau du deuxième compartiment (5), une distance (d₂) entre la couche de couverture souple (14) et le deuxième fond souple (7) est plus courte qu'une distance (p₂) entre la couche de couverture souple (14) et le deuxième fond souple (7) au niveau des bords périphériques (9) du deuxième compartiment (5), moyennant quoi le premier fond souple (6) est concave par rapport au premier compartiment (4) et le deuxième fond souple (7) est concave par rapport au deuxième compartiment (5).

2. Procédé selon l'une quelconque des revendications précédentes, dans lequel le plateau (1) comporte des parois latérales rigides (8, 9) s'étendant dans la direction verticale du plateau (1) de telle façon qu'une première paroi latérale (8) ensemble avec la première cloison (11) encercle le premier compartiment (4), et qu'une deuxième paroi latérale (9) ensemble avec la première cloison (11) encercle le deuxième compartiment (5).

3. Procédé selon l'une quelconque des revendications précédentes, dans lequel la soupape unidirectionnelle (16) est disposée sur la couche de couverture souple (14).

4. Procédé selon la revendication 3, dans lequel la soupape unidirectionnelle (16) est disposée sur une partie de la couche de couverture souple (14) recouvrant le premier compartiment (4).

5. Procédé selon l'une quelconque des revendications 3-4, dans lequel la soupape unidirectionnelle (16) est appliquée sur la couche de couverture souple (14) pendant l'étape de recouvrement dudit plateau (1) avec la couverture souple (14) pour former un emballage (15).

6. Procédé selon l'une quelconque des revendications précédentes, dans lequel l'étape de recouvrement du plateau (1) avec une couche de couverture souple (14) pour former un emballage (15) comprend le scellage individuel du premier compartiment (4) et du deuxième compartiment (5) de manière suffisante pour empêcher le transfert du produit alimentaire (2, 3) entre les compartiments (4, 5).

7. Procédé selon l'une quelconque des revendications précédentes, dans lequel l'étape de disposition du produit alimentaire (2, 3) dans le premier compartiment (4) et dans le deuxième compartiment (5) comprend les étapes suivantes :
- disposition d'une première part de produit alimentaire (2) jusqu'à un niveau de remplissage de 20-80% dans le premier compartiment (4), de préférence à un niveau de remplissage de 30-70% dans le premier compartiment (4), et mieux, à un niveau de remplissage de 50-70% dans le premier compartiment (4) ; et
- disposition d'une deuxième part de produit alimentaire (3) jusqu'à un niveau de remplissage de 20-80% dans le deuxième compartiment (5), de préférence à un niveau de remplissage de 30-70% dans le deuxième compartiment (5), et mieux, à un niveau de remplissage de 50-70% dans le deuxième compartiment (5).

8. Procédé selon l'une quelconque des revendications précédentes, dans lequel le premier canal (12) est formé comme une gorge évidée dans la cloison (11).

9. Emballage (15) contenant un produit alimentaire (2, 3) pasteurisé et emballé sous vide, ledit emballage comprenant un plateau (1) présentant une première cloison de séparation (11) divisant le plateau (1) en un premier compartiment (4) et un deuxième compartiment (5) contenant le produit alimentaire (2, 3) pasteurisé et emballé sous vide ;
le premier compartiment (4) présentant un premier fond souple (6) et une paroi latérale rigide (8) s'étendant dans la direction verticale du plateau (1), le deuxième compartiment (5) présentant un deuxième fond souple (7) et une deuxième paroi latérale rigide (9) s'étendant dans la direction verticale du plateau (1) ;
dans lequel le plateau (1) est recouvert par une couche de couverture souple (14) pour former l'emballage (15), la couche de couverture souple (14) étant dotée d'une soupape unidirectionnelle (16) fermée, pour une communication unidirectionnelle entre l'intérieur de l'emballage (15) et l'extérieur de celui-ci ;
dans lequel l'emballage (15) avec le produit alimentaire (2, 3) emballé sous vide dans celui-ci présente une première partie centrale de compartiment (36) et une deuxième partie centrale de compartiment (38), où, au niveau du premier compartiment (4), une distance (d₁) entre la couche de couverture souple (14) et le premier fond souple (6) est plus courte qu'une distance (p₁) entre la couche de couverture souple (14) et le premier fond souple (6) au niveau des bords périphériques (8) du premier compartiment (4), et où, au niveau du deuxième compartiment (5), une distance (d₂) entre la couche de couverture souple (14) et le deuxième fond souple (7) est plus courte qu'une distance (p₂) entre la couche de couverture souple (14) et le deuxième fond souple (7) au niveau des bords périphériques (9) du deuxième compartiment (5), et moyennant quoi le premier fond souple (6) est concave par rapport au premier compartiment (4) et le deuxième fond souple (7) est concave par rapport au deuxième compartiment (5),
**caractérisé en ce que** la première cloison de séparation (11) est dotée d'un premier canal (12) destiné à transférer un gaz et/ou de la vapeur entre les premier et deuxième compartiments (4, 5).

10. Emballage (15) selon la revendication 9, dans lequel le premier fond souple (6) est plus souple que la première paroi latérale (8) et la cloison (11), et le deuxième fond souple (7) est plus souple que la deuxième paroi latérale (9) et la cloison (11).

11. Emballage (15) selon l'une quelconque des revendications 9-10, dans lequel la couche de couverture souple (14) est collée sur le bord périphérique (8) du premier compartiment (4) et sur le bord périphérique (9) du deuxième compartiment (5), ainsi que sur la cloison (11).

12. Emballage (15) selon l'une quelconque des revendications 9-11, dans lequel le premier canal (12) de la cloison (11) est en outre défini par la couche de couverture (14).

13. Emballage (15) selon l'une quelconque des revendications 9 à 12, dans lequel le premier canal (12) est scellé par la couche de couverture souple (14) lors de la création du vide dans l'emballage (15) à partir de la pasteurisation de l'emballage (15) et du refroidissement de l'emballage (15).

14. Emballage (15) selon l'une quelconque des revendications 9 à 13, dans lequel la soupape unidirectionnelle (16) est disposée sur une partie de la couche de couverture souple (14) recouvrant le premier compartiment (4).

15. Emballage (15) selon l'une quelconque des revendications 9 à 14, dans lequel la soupape unidirectionnelle (16) comprend une fente formée dans la couche de couverture souple (14) et un film adhésif refermable (17) s'étendant à travers la fente.
